# EUROPÄISCHE PATENTANMELDUNG

(11) **EP 3 285 214 A1**
(43) Veröffentlichungstag der Anmeldung: **21.02.2018**
(21) Anmeldenummer: 16185009.4
(22) Anmeldetag: 19.08.2016
(51) Int. Cl.: G06Q 10/08

(54) **LAGERSYSTEM ZUR ERSATZTEILVERSORGUNG**

(71) Anmelder: Eisenmann SE, 71032 Böblingen (DE)
(72) Erfinder: VON KRAULAND, Matthias, 3780 Gstaad (CH); LINK, Kersten, 71120 Grafenau (DE)
(74) Vertreter: 2K Patentanwälte Blasberg Kewitz & Reichel

(57) **Zusammenfassung**

Ein Lagersystem (1, 26) zur Ersatzteilversorgung, umfassend eine Anzahl von Außenlagern (16, 18, 52, 54, 56), die jeweils einem Einsatzort (8, 10, 12, 14, 44, 46, 48, 50) von Ersatzteilen zugeordnet sind, und eine zentrale Servereinheit (6, 36), wobei die zentrale Servereinheit (6, 36) dafür ausgebildet ist, bei einem Bedarf eines Ersatzteils an einem ersten Einsatzort (8, 10, 12, 14, 44, 46, 48, 50) oder einem ihm zugeordneten ersten Außenlager (16, 18, 52, 54, 56) eine erste Anfrage auf Lieferung des Ersatzteils an den ersten Einsatzort (8, 10, 12, 14, 44, 46, 48, 50) oder das ihm zugeordnete erste Außenlager (16, 18, 52, 54, 56) zu empfangen, soll die Ausfallzeit technischer Vorrichtungen wie Maschinen, Anlagen etc. minimieren. Dazu speichert die zentrale Servereinheit (6, 36) die Bestände der Ersatzteile in jedem Außenlager (16, 18, 52, 54, 56) der Anzahl von Außenlagern (16, 18, 52, 54, 56), und die zentrale Servereinheit (6, 36) ist weiter dafür ausgelegt, als Reaktion auf die Anfrage eine Verfügbarkeit des Ersatzteils in einem zweiten Außenlager (16, 18, 52, 54, 56) der Anzahl von Außenlagern (16, 18, 52, 54, 56) zu ermitteln und bei Erfüllung eines oder mehrerer vorgegebener Kriterien eine zweite Anfrage an das zweite Außenlager (16, 18, 52, 54, 56) auf Lieferung des Ersatzteils an den ersten Einsatzort (8, 10, 12, 14, 44, 46, 48, 50) oder das ihm zugeordnete erste Außenlager (16, 18, 52, 54, 56) zu richten.

## Beschreibung

Die Erfindung betrifft ein Lagersystem zur Ersatzteilversorgung, umfassend eine Anzahl von Außenlagern, die jeweils einem Einsatzort von Ersatzteilen zugeordnet sind, und eine zentrale Servereinheit, wobei die zentrale Servereinheit dafür ausgebildet ist, bei einem Bedarf eines Ersatzteils an einem ersten Einsatzort oder einem ihm zugeordneten ersten Außenlager eine erste Anfrage auf Lieferung des Ersatzteils an den ersten Einsatzort oder das ihm zugeordnete erste Außenlager zu empfangen. Sie betrifft weiter ein Verfahren zur Ersatzteilversorgung in einem Lagersystem und eine Servereinheit.

Für den dauerhaften und zuverlässigen Betrieb von aufwändigen technischen Vorrichtungen wie z. B. Maschinen, Anlagen, Fahrzeugen, elektronischen Geräten etc. bedarf es nicht nur einer entsprechenden Konstruktion und Auslegung, sondern es ist auch eine gute Ersatzteilversorgung entscheidend. Der Ausfall einzelner Teile ist in der Regel aufgrund von Verschleiß unvermeidbar, so dass zum ausfallsicheren Betrieb derartiger Vorrichtungen Ersatzteile notwendig sind. Ersatzteile müssen somit in der richtigen Menge und zum richtigen Zeitpunkt an ihrem jeweiligen Einsatzort, d.h. dem Standort der Vorrichtung sein.

Zur Sicherstellung eines ausfallsicheren Betriebes werden daher in der Regel entsprechende Lagersysteme vorgesehen. Insbesondere für Ersatzteile für Teile, deren Ausfall am Einsatzort zum Stillstand der Maschine, Anlage etc. führt, werden dabei Außenlager unterhalten, die jeweils einem Einsatzort von Ersatzteilen zugeordnet sind. Diese Außenlager sind durch räumliche Nähe zu den Einsatzorten, d.h. z.B. den Standorten der Maschine, Anlage etc. gekennzeichnet und bevorraten in der Regel auch ohne akute Notwendigkeit derartige Ersatzteile, die dann bei einem Ausfall schnell - da ortsnah - verfügbar sind. Hierbei können mehrere, z.B. räumlich nah beieinander liegende Einsatzorte auch einem gemeinsamen Außenlager zugeordnet sein.

Zur technischen Durchführung des Anforderungs- und Liefervorgangs existiert hierbei üblicherweise eine zentrale Servereinheit. Bei einem Bedarf eines Ersatzteils an einem Einsatzort oder dem ihm zugeordneten Außenlager wird üblicherweise eine Anfrage auf Lieferung des Ersatzteils an diesen Einsatzort oder das ihm zugeordnete Außenlager an die Servereinheit gesendet, die dann eine entsprechende Lieferung veranlasst.

Trotz derartiger Maßnahmen kann es jedoch vorkommen, dass zum Zeitpunkt einer derartigen Anforderung keine Ersatzteile verfügbar sind, weil z.B. zu einem gegebenen Zeitpunkt nicht genügend Ersatzteile produziert wurden. Hierdurch kann eine übermäßig lange Ausfallzeit einer Maschine, Anlage etc. entstehen.

Es ist daher Aufgabe der Erfindung, ein Lagersystem zur Ersatzteilversorgung sowie ein Verfahren zur Ersatzteilversorgung in einem Lagersystem bereitzustellen, welche die Ausfallzeit technischer Vorrichtungen wie Maschinen, Anlagen etc. minimieren.

Diese Aufgabe wird bezüglich des Lagersystems erfindungsgemäß gelöst, indem die zentrale Servereinheit die Bestände der Ersatzteile in jedem Außenlager der Anzahl von Außenlagern speichert, und die zentrale Servereinheit weiter dafür ausgelegt ist, als Reaktion auf die Anfrage eine Verfügbarkeit des Ersatzteils in einem zweiten Außenlager der Anzahl von Außenlagern zu ermitteln und bei Erfüllung eines oder mehrerer vorgegebener Kriterien eine zweite Anfrage an das zweite Außenlager auf Lieferung des Ersatzteils an den ersten Einsatzort oder das ihm zugeordnete erste Außenlager zu richten.

Bezüglich des Verfahrens wird die Aufgabe gelöst, indem in der zentralen Servereinheit die Bestände der Ersatzteile in jedem der Außenlager der Anzahl von Außenlagern gespeichert werden, und die zentrale Servereinheit als Reaktion auf die Anfrage eine Verfügbarkeit des Ersatzteils in einem zweiten Außenlager der Anzahl von Außenlagern ermittelt und bei Erfüllung eines oder mehrerer vorgegebener Kriterien eine zweite Anfrage an das zweite Außenlager auf Lieferung des Ersatzteils an den ersten Einsatzort oder das ihm zugeordnete erste Außenlager richtet.

Die Erfindung geht dabei von der Überlegung aus, dass eine Ausfallzeit der Vorrichtung, in der ein Ersatzteil benötigt wird, minimiert werden kann, wenn sichergestellt wird, dass das benötigte Ersatzteil, welches im der Vorrichtung zugeordneten Außenlager nicht verfügbar ist, so schnell wie möglich verfügbar gemacht wird. Hierbei wurde erkannt, dass die notwendige Transportzeit verkürzt werden kann, wenn eine Lieferung von Ersatzteilen nicht immer zwingend vom Produktionsstandort oder einer anderen Quelle des Ersatzteils erfolgt, sondern bedarfsweise auch von anderen Außenlagern. Da die Anfragen nach Ersatzteilen jedoch in der Regel an die zentrale Servereinheit gesendet werden, sollte in dieser zentralen Servereinheit auch die Information über die Ersatzteilverfügbarkeit in den jeweiligen Außenlagern vorhanden und gespeichert sein. Dadurch kann die zentrale Servereinheit ermitteln, ob ein angefragtes Ersatzteil in anderen Außenlagern vorhanden ist. Anhand eines vorgegebenen Kriteriums oder mehrerer vorgegebener Kriterien kann die Servereinheit dann bestimmen, dass eine Ersatzteillieferung von einem anderen Außenlager an das anfordernde Außenlager erfolgt, was den Lieferprozess beschleunigt und die Ausfallzeit der Maschine, der Anlage etc., die dem anfordernden Außenlager zugeordnet ist, verringert.

Vorteilhafterweise wird neben den Außenlagern üblicherweise ein Hauptlager unterhalten, welches z.B. einem Produktionsstandort der entsprechenden Ersatzteile zugeordnet sein kann oder von Drittproduzenten hergestellte Ersatzteile zum weiteren Vertrieb lagert. Dieses Hauptlager ist dann dadurch charakterisiert, dass die am Produktionsstandort hergestellten Ersatzteile zunächst hierher verbracht und zwischengelagert werden. Generell ist das Hauptlager jedoch der Servereinheit bzw. dem Betreiber dieser Servereinheit zugeordnet und wird von diesem betrieben. Die zentrale Servereinheit speichert in diesem Fall dann auch die Bestände der Ersatzteile im Hauptlager.

In einer ersten vorteilhaften Ausgestaltung des Lagersystems oder des Verfahrens ist eine Nichtverfügbarkeit des Ersatzteils - beispielsweise im Hauptlager - ein vorgegebenes Kriterium. Die Servereinheit veranlasst also dann eine Lieferung von einem anderen Außenlager, wenn am Hauptlager das angeforderte Ersatzteil nicht verfügbar ist oder es aus anderen Gründen durch Veranlassung der zentralen Servereinheit nicht verfügbar gemacht werden kann. In einer zweiten vorteilhaften Ausgestaltung ist eine kürzere Lieferzeit ein vorgegebenes Kriterium. So kann z.B. eine kürzere Lieferzeit vom zweiten Außenlager zum ersten Einsatzort oder das ihm zugeordnete erste Außenlager als vom Hauptlager oder einem Produktionsstandort des Ersatzteils zum ersten Einsatzort oder das ihm zugeordnete erste Außenlager bestehen. Selbst wenn also am Hauptlager oder einem Produktionsstandort des Ersatzteils ein Ersatzteil verfügbar ist, kann die Servereinheit bestimmen, dass eine Lieferung von einem anderen Außenlager erfolgen soll, wenn hier die Lieferzeit kürzer ist. Vorteilhafterweise kann hier z.B. ein Grenzwert für den Zeitgewinn vorgegeben werden, so dass beispielhaft eine Lieferung vom zweiten Außenlager erfolgt, wenn die Lieferzeit weniger als die Hälfte der Lieferzeit vom Hauptlager oder einem Produktionsstandort des Ersatzteils beträgt. Weiterhin kann bei einer Verfügbarkeit des angeforderten Ersatzteils in mehreren Außenlagern eine Lieferung von demjenigen Außenlager erfolgen, welches die kürzeste Lieferzeit zum anfordernden Außenlager oder Einsatzort aufweist. Ein weiteres Kriterium kann vorteilhafterweise auch das Alter des Ersatzteils sein, so dass zuerst ältere Ersatzteile versendet werden. Diese Kriterien können auch beliebig kombiniert und gewertet werden.

In weiterer vorteilhafter Ausgestaltung des Lagersystems und/oder des Verfahrens ist die Servereinheit mit dem Internet verbunden und zum Empfang von Anfragen über eine Internetplattform ausgebildet. Eine derartige Internetplattform ermöglicht das technisch einfache Absenden von Anfragen an die Servereinheit. Eine Internetplattform bietet auch die Möglichkeit eines endgeräteunabhängigen Zugangs z.B. über Mobilgeräte.

Weist ein Außenlager ein Lagerverwaltungssystem auf, d.h. ein System, welches automatisiert die Bestände des Außenlagers erfasst und aktualisiert, ist die Servereinheit vorteilhafterweise mit diesem Lagerverwaltungssystem des jeweiligen Außenlagers verbunden. Es empfängt die Bestände der Ersatzteile im jeweiligen Außenlager dabei vorteilhafterweise kontinuierlich vom Lagerverwaltungssystem. Eine derartige kontinuierliche Synchronisation kann z.B. über eine Internetverbindung realisiert werden. Durch die Synchronisation wird sichergestellt, dass die Servereinheit jederzeit aktuelle Informationen zu den Beständen in allen Lagern hat. Ist das Lagerverwaltungssystem software- oder hardwareseitig in einem anderen Standard realisiert als die Servereinheit bzw. deren Software, so ist vorteilhafterweise zwischen Servereinheit und Lagerverwaltungssystem eine entsprechende Schnittstelle vorgesehen, die zum Austausch der Bestandsdaten und der Anforderungsdaten ausgebildet ist.

Die Servereinheit ist weiterhin vorteilhafterweise dafür ausgebildet, anhand der empfangenen Anfragen auf Lieferung von Ersatzteilen eine Ausfallquote jedes Ersatzteils zu ermitteln. Da die Servereinheit nunmehr die Daten über die Außenlagerbestände der Ersatzteile vorliegen hat, ist es möglich, in statistischer Weise Informationen über den Verbrauch und damit die Ausfallquote des jeweiligen Ersatzteiles zu generieren. Anhand dieser Ausfallquote kann in weiterer vorteilhafter Ausgestaltung ein Minimalbestand des Ersatzteils - insbesondere für das Hauptlager und/oder die Außenlager - bestimmt werden. Ist nämlich die Ausfallquote bekannt und können hierüber weitere Statistiken erhoben werden, so kann ermittelt werden, wie viele Ersatzteile mit einer vorgegebenen Wahrscheinlichkeit innerhalb eines zukünftigen Zeitraumes am Hauptlager und/oder an einem Außenlager benötigt werden. Hieraus kann ein Minimalbestand über alle Lager oder für jedes einzelne Lager ermittelt werden.

Die Servereinheit ist dabei vorteilhafterweise weiterhin dafür ausgebildet, als Reaktion auf das Erkennen des Unterschreitens des Minimalbestands eines Ersatzteils in einem Außenlager eine Lieferung des Ersatzteils an das Außenlager zu veranlassen. Mit anderen Worten: Durch die wie beschrieben erhobenen Daten bezüglich der Ausfallquote kann die Servereinheit vollkommen selbständig eine ausreichende Bevorratung von Ersatzteilen am Einsatzort bzw. in den Außenlagern gewährleisten.

In noch weiterer vorteilhafter Ausgestaltung sind zentrale Servereinheit, erstes Außenlager und zweites Außenlager jeweils unterschiedlichen wirtschaftlichen Einheiten zugeordnet, d.h. sie gehören unterschiedlichen natürlichen oder juristischen Personen. Gerade in einer solchen Konfiguration, in der die zentrale Servereinheit z.B. dem Zulieferer des Ersatzteils zugeordnet ist, die Außenlager jedoch unterschiedlichen Abnehmern des Zulieferers, hat das System vielfältige Vorteile: So kann z.B. trotz unterschiedlicher Produkte der Abnehmer durchaus der Bedarf an Ersatzteilen gleich sein, da u.U. gleiche Ersatzteile verwendet werden. Verwaltet wie oben dargestellt die Servereinheit des Zulieferers auch die Bestände der Abnehmer in ihren jeweiligen Außenlagern, kann für jeden teilnehmenden Abnehmer die Ausfallzeit seiner Maschinen, Anlagen etc. verkürzt werden, indem bei einer Anforderung eines Ersatzteils eine Lieferung des Ersatzteils aus dem Außenlager eines anderen Abnehmers an den Anforderer veranlasst. Gerade in einer derartigen Konfiguration, in der die Lagerverwaltungssysteme der einzelnen Abnehmer nicht zwingend kompatibel sind, können die zuvor beschriebenen Schnittstellen zur Anwendung kommen.

Eine Servereinheit ist vorteilhafterweise zum Ausführen des beschriebenen Verfahrens ausgebildet. Sie weist hierzu eine Speichereinheit mit entsprechenden Softwarecodeabschnitten auf, die die Servereinheit bei Ausführung zum Ausführen des Verfahrens veranlassen.

Die mit der Erfindung erzielten Vorteile bestehen insbesondere darin, dass durch die Synchronisierung von Bestandsdaten von Ersatzteilen in Außenlagern, auch z.B. von Abnehmern eines Ersatzteilherstellers, eine zentralisierte Datenhaltung ermöglicht wird und dadurch eine schnellere Lieferung von Ersatzteilen ermöglicht wird, da ggf. ein Ersatzteil auch von einem anderen Außenlager geliefert werden kann und nicht nur vom Hauptlager. Hierdurch werden Ausfallzeiten verkürzt, die z.B. im Falle eines Defekts, Unfalls, Verschleißes oder einer unsachgemäßen Behandlung entstehen. Es wird gewährleistet, dass eine aufwändige und teure Vorrichtung mittels eines schnell zur Verfügung stehenden Ersatzteiles in kurzer Zeit wieder einsatzbereit ist.

Ausführungsbeispiele der Erfindung werden anhand von Zeichnungen erläutert. Darin zeigen:
FIG 1 eine erste Ausführungsform eines Lagersystems,
FIG 2 eine zweite Ausführungsform eines Lagersystems mit Lagern unterschiedlicher wirtschaftlicher Einheiten
FIG 3 ein schematisches Ablaufdiagramm eines Verfahrens zur Ersatzteilversorgung.

Gleiche Teile sind in allen Figuren mit denselben Bezugszeichen versehen.

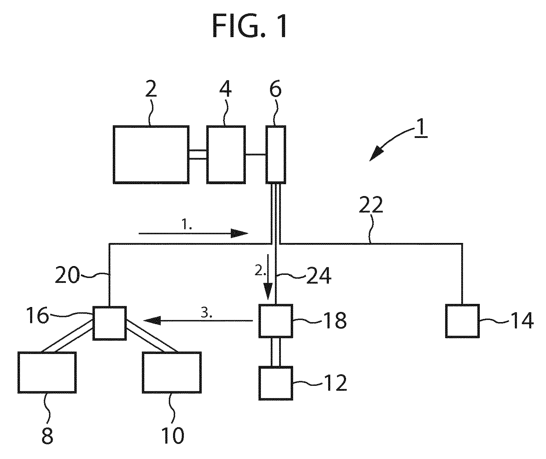

FIG 1 zeigt eine erste Ausführungsform eines Lagersystems 1 für Ersatzteile. In einem Produktionsstandort 2 werden verschiedene Ersatzteile hergestellt. Diese werden im angeschlossenen, dem Produktionsstandort 2 zugeordneten und in dessen räumlicher Nähe angeordneten Hauptlager 4 gelagert. An das Hauptlager 4 ist eine Servereinheit 6 angeschlossenen, die in dem Hauptlager 4 oder auch extern angeordnet sein kann. Sie weist eine Datenverbindung zum Hauptlager 4 auf, über die sie Daten über den Ersatzteilbestand des Hauptlagers 4 erhält. Die Servereinheit 6 hat somit stets einen aktuellen Datenbestand der im Hauptlager 4 vorhandenen Ersatzteile.

Weiterhin sind in FIG 1 verschiedene Einsatzorte 8, 10, 12 für die Ersatzteile gezeigt. Abhängig von der Art der Vorrichtungen, für die die Ersatzteile gedacht sind, kann es sich hier beispielsweise um Fabriken mit Maschinen und Anlagen handeln, für die Ersatzteile benötigt werden. Sind die Ersatzteile für mobile Geräte gedacht, wie z.B. für Fahrzeuge oder elektronische Geräte, kann es sich bei den Einsatzorten 8, 10, 12, 14 auch um Werkstätten handeln. Alternativ kann es sich bei den Einsatzorten 8, 10, 12 um weitere Versendestationen handeln, von denen aus die Ersatzteile weiter versendet werden.

Weiterhin zeigt FIG 1 eine Mehrzahl von Außenlagern 16, 18. Diese sind jeweils Einsatzorten 8, 10, 12 zugeordnet, was bedeutet, dass die dort gelagerten Ersatzteile ursprünglich aus dem Hauptlager 4 für die den Außenlagern 16, 18 jeweils zugeordneten Einsatzorte 8, 10, 12 angefordert waren. Sie werden für die ihnen zugeordneten Einsatzorte 8, 10, 12 dort gelagert. Die Außenlager 16, 18 sind ebenfalls jeweils in der räumlichen Nähe der ihnen jeweils zugeordneten Einsatzorte 8, 10, 12 angeordnet.

Im Ausführungsbeispiel der FIG 1 ist den Einsatzorten 8, 10 gemeinsam das Außenlager 16 zugeordnet. Dem Einsatzort 12 ist das Außenlager 18 zugeordnet, während der Einsatzort 14 kein eigenes, ihm zugeordnetes Außenlager aufweist. Beliebige andere Konfigurationen sind möglich.

Im Ausführungsbeispiel der FIG 1 wird nun beispielhaft am Einsatzort 8 ein Ersatzteil benötigt. Das dem Einsatzort 8 zugeordnete Außenlager 16 hat kein solches Ersatzteil mehr im Bestand. Alternativ könnte durch die Anforderung am Einsatzort 8 ein Meldebestand im Außenlager 16 unterschritten werden, der eine Ersatzteilbestellung auslöst. Das Außenlager 16 sendet daher in einem 1. Schritt eine Anfrage auf Lieferung des Ersatzteils an die zentrale Servereinheit 6. Diese kann entweder manuell von einem Benutzer vor Ort oder aber automatisiert über ein Lagerverwaltungssystem (nicht gezeigt) des Außenlagers 16 abgesendet werden. Die Anfrage wird über eine Datenverbindung 20 an die Servereinheit 6 gesendet, die beliebig ausgestaltet sein kann, z.B. drahtlos oder drahtgebunden.

Würde in einer nicht näher dargestellten Alternative am Einsatzort 14 das Fehlen eines Ersatzteils festgestellt werden, so würde die Anfrage direkt vom Einsatzort 14 über die Datenverbindung 22 an die Servereinheit 6 gesendet werden, da Einsatzort 14 kein ihm zugeordnetes Außenlager 16, 18 aufweist.

In der Servereinheit 6 wird nun die Anfrage empfangen. Weiterhin ist die Servereinheit 6 über eine weitere, wiederum beliebig ausgestaltete Datenverbindung 24 mit dem Außenlager 18 verbunden. Die Servereinheit 6 ist dafür ausgebildet, über die Datenleitungen 20, 24 ständig die Lagerbestände von Ersatzteilen in den Außenlagern 16, 18 zu empfangen und zeitgenau aktualisiert abgespeichert zu halten. Hierfür kann in der Servereinheit ein entsprechend ausgestaltetes, nicht näher dargestelltes Bestandsspeichermodul mit einer Datenbank vorgesehen sein. Dadurch ist in der Servereinheit 6 jederzeit bekannt, welche Ersatzteile in welchem der Außenlager 16, 18 in welcher Anzahl vorrätig sind.

Die Servereinheit 6 wertet die Anfrage - beispielsweise mit einem hierfür softwareseitig ausgebildeten, nicht näher dargestellten Auswertungsmodul - vom Außenlager 16 anhand verschiedener vorgegebener Kriterien aus, um zu ermitteln, ob in einem 2. Schritt keine Lieferung des Ersatzteils vom Hauptlager 4 sondern stattdessen eine Anfrage an das Außenlager 18 gesendet werden soll, die darauf gerichtet ist, das entsprechende Ersatzteil, das im Außenlager 18 vorrätig ist, an das Außenlager 16 zu senden.

Eines dieser Kriterien kann in einer Ausführungsform beispielsweise die Nichtverfügbarkeit des Ersatzteils im Hauptlager 4 sein. Ein anderes Kriterium kann eine kürzere Lieferzeit vom Außenlager 18 zum Außenlager 16 als vom Hauptlager 4 zum Außenlager 16 sein. Diese Kriterien können beliebig kombiniert und gewichtet werden. Beispielhaft sei angenommen, die Servereinheit 6 stellt fest, dass im Hauptlager 4 kein solches Ersatzteil mehr vorhanden ist, jedoch im Außenlager 18 dieses Ersatzteil vorhanden ist. Im 2. Schritt sendet die Servereinheit über die Datenverbindung 24 daher eine Anfrage an das Außenlager 18, die darauf gerichtet ist, das entsprechende Ersatzteil an das Außenlager 16 zu senden. Die Auswertung und das Absenden der Anfrage erfolgt automatisiert.

Im 3. und letzten Schritt erfolgt dann eine Lieferung des Ersatzteils vom Außenlager 18 an das Außenlager 16. Dies kann erfolgen, indem auf einem Benutzerterminal im Außenlager 18 eine entsprechende Mitteilung an einen Benutzer dargestellt wird, die dann ausgeführt wird.

In einer alternativen Ausführungsform kann - da der Servereinheit 6 die Bestände in den Außenlagern 16, 18 aktuell gespeichert hält - die Lieferanfrage auch direkt von einem nicht näher dargestellten Bestandsüberwachungsmodul der Servereinheit 6 selbst ausgelöst werden. Mit anderen Worten: Es ist möglich, die Servereinheit 6 mittels des Bestandsüberwachungsmoduls selbst so zu konfigurieren, dass das Bestandsüberwachungsmodul z.B. bei der angesprochenen Unterschreitung eines Meldebestands in einem Außenlager 16, 18 selbsttätig die Anfrage auf Lieferung sendet. Diese wird also innerhalb der Servereinheit 6 vom Bestandsüberwachungsmodul zum Auswertungsmodul gesendet. Die Servereinheit 6 ist somit selbst Sender und Empfänger der Anfrage.

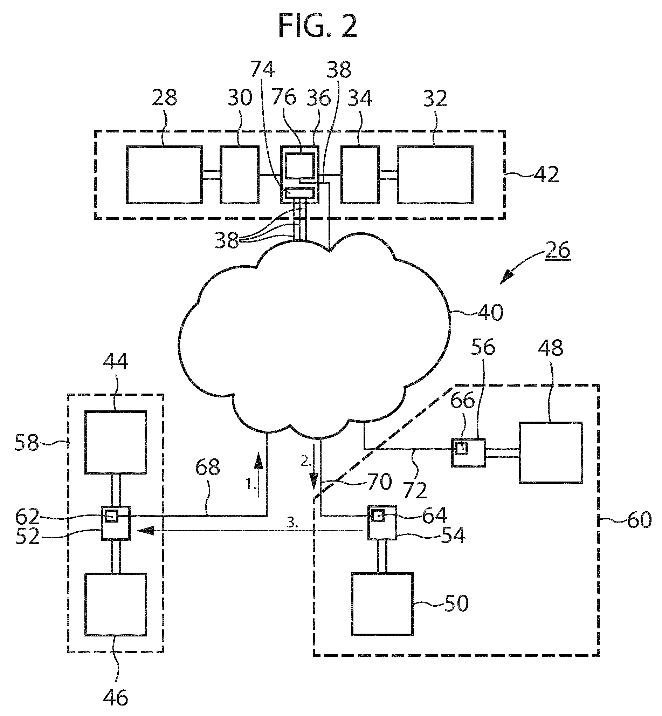

FIG 2 zeigt eine weitere Ausführungsform eines Lagersystems 26 für Ersatzteile. Wie FIG 1 zeigt auch das Lagersystem 26 einen Produktionsstandort 28, in dem verschiedene Ersatzteile hergestellt werden. Diese werden im angeschlossenen, dem Produktionsstandort 28 zugeordneten und in dessen räumlicher Nähe angeordneten Hauptlager 30 gelagert. In der Ausführungsform nach FIG 2 existiert noch ein weiterer Produktionsstandort 32, in dem weitere Ersatzteile hergestellt werden. Diese werden im angeschlossenen, dem Produktionsstandort 32 zugeordneten und in dessen räumlicher Nähe angeordneten Hauptlager 34 gelagert. Die Hauptlager 30, 34 können in räumlicher Nähe oder Entfernung voneinander angeordnet sein.

An beide Hauptlager 30, 34 ist eine Servereinheit 36 angeschlossenen, die in einem der Hauptlager 30, 34 oder auch extern angeordnet sein kann. Sie weist eine Datenverbindung zu jedem der Hauptlager 30, 34 auf, über die sie Daten über den Ersatzteilbestand der Hauptlagers 30, 34 erhält. Wie in der Ausführungsform nach FIG 1 hat somit die Servereinheit 36 stets einen aktuellen Datenbestand der in den Hauptlagern 30, 34 vorhandenen Ersatzteile.

In alternativen, nicht gezeigten Ausführungsformen zu FIG 1 und FIG 2 können die Hauptlager 4, 30, 34 auch entfallen. In diesem Fall gibt es keinen zentralen Lagerort für Ersatzteile, sondern die Servereinheit 6, 36 verwaltet lediglich die Ersatzteilhaltung und veranlasst im Bedarfsfall eine Lieferung eines Ersatzteils von einem externen Produktionsstandort - es sei denn sie bestimmt wie beschrieben, dass eine Lieferung von Außen- zu Außenlager vorteilhafter ist.

Die Servereinheit 36 ist über Datenverbindungen 38 mit dem Internet 40 verbunden. In einer alternativen, nicht dargestellten Ausführungsform kann die Datenverbindung zwischen Servereinheit 36 und einem oder beiden der Hauptlager 30, 34 ebenfalls über das Internet 40 verlaufen. Produktionsstandorte 28, 32, Hauptlager 30, 34 und Servereinheit 36 stehen unter der Kontrolle einer ersten wirtschaftlichen Einheit 42, hier einem Hersteller der Ersatzteile.

Weiterhin sind auch in FIG 2 verschiedene Einsatzorte 44, 46, 48, 50 für die Ersatzteile gezeigt. Bezüglich deren Ausgestaltung wird auf die Ausführungen zu FIG 1 verwiesen. Weiterhin zeigt auch FIG 2 eine Mehrzahl von Außenlagern 52, 54, 56. Diese sind jeweils Einsatzorten 44, 46, 48, 50 zugeordnet, was wie zu FIG 1 beschrieben bedeutet, dass die dort gelagerten Ersatzteile ursprünglich für die den Außenlagern 52, 54, 56 jeweils zugeordneten Einsatzorte 44, 46, 48, 50 angefordert waren. Sie werden für die ihnen zugeordneten Einsatzorte 44, 46, 48, 50 dort gelagert. Die Außenlager 52, 54, 56 sind ebenfalls jeweils in der räumlichen Nähe der ihnen jeweils zugeordneten Einsatzorte 44, 46, 48, 50 angeordnet.

Im Ausführungsbeispiel der FIG 2 ist den Einsatzorten 44, 46 gemeinsam das Außenlager 52 zugeordnet. Dem Einsatzort 50 ist das Außenlager 54 zugeordnet, während dem Einsatzort 38 das Außenlager 56 zugeordnet ist. Die Einsatzorte 44, 46 und das Außenlager 52 stehen unter der Kontrolle einer zweiten wirtschaftlichen Einheit 58, hier einem Produzenten, der an seinem Einsatzort 44, 46 Anlagen oder Maschinen im Einsatz hat, die die Ersatzteile des Herstellers (erste wirtschaftliche Einheit 42) benötigen. Der Ersatzteilhersteller kann dabei auch der Hersteller der am Einsatzort 44, 46 eingesetzten Anlagen oder Maschinen sein. Einsatzort 50 mit Außenlager 54 und Einsatzort 38 mit Außenlager 56 stehen unter der Kontrolle einer dritten wirtschaftlichen Einheit 60, für die gleiches wie für die zweite wirtschaftliche Einheit 58 gilt.

Jedes der Außenlager 52, 54, 56 weist jeweils ein Lagerverwaltungssystem 62, 64, 66 auf, welches die Bestände der Ersatzteile im jeweiligen Außenlager 52, 54, 56 aktuell speichert. Die Lagerverwaltungssysteme 62, 64, 66 sind jeweils über Datenverbindungen 68, 70, 72 mit dem Internet 40 verbunden. Über das Internet 40 sind die Lagerverwaltungssystem 62, 64, 66 somit mit der Servereinheit 36 verbunden und synchronisieren kontinuierlich ihre Lagerbestände an Ersatzteilen mit der Servereinheit 36. Da im Ausführungsbeispiel der FIG 2 Außenlager 52, 54, 56 und Servereinheit 36 unterschiedlichen wirtschaftlichen Einheiten 42, 58, 60 angehören, ist eine Kompatibilität von Servereinheit 36 und Lagerverwaltungssystemen 62, 64, 66 nicht unbedingt gewährleistet. Daher weist die Servereinheit 36 hier ein Schnittstellenmodul 74 auf, welches Schnittstellen zu unterschiedlichen Lagerverwaltungssystemen 62, 64, 66 bereitstellt und so eine Synchronisation der Ersatzteilbestände dennoch ermöglicht.

Der prinzipielle Ablauf einer Anfrage auf Lieferung eines Ersatzteiles wurde bereits zu FIG 1 ausführlich beschrieben, so dass hierzu zur Vermeidung von Wiederholungen darauf verwiesen wird. Das Schnittstellenmodul 74 ist auch dazu ausgebildet, eine Weiterleitung der Anfragen zwischen Lagerverwaltungssystemen 62, 64, 66 und Servereinheit 36 zu ermöglichen. Im Ausführungsbeispiel der FIG 2 wird die Anfrage in einem ersten Schritt aus dem Außenlager 52 gesendet, die Servereinheit 36 sendet in einem zweiten Schritt nach entsprechender Auswertung der Kriterien eine Anfrage auf Versendung des Ersatzteils an Außenlager 54, und in einem dritten Schritt wird das Ersatzteil von Außenlager 54 an Außenlager 52 geliefert.

Zur Verwaltung des Lieferprozesses und der gesamten Konfiguration stellt die Servereinheit 36 im Ausführungsbeispiel nach der FIG 2 eine Internetplattform 76 zur Verfügung. Hier können endgeräteunabhängig Anfragen auf Lieferung eines Ersatzteils aus einem mit einem Einsatzort 44, 46, 48, 50 oder einem Außenlager 52, 54, 56 über ein jeweils mit diesen assoziiertes internetfähiges Endgerät wie ein Tablet, ein Smartphone etc. an die Servereinheit 36 übermittelt werden.

Die Verwendung eines mobilen Endgeräts ermöglicht auch die Integration von optoelektronisch lesbaren Codes, wie z.B. Barcodes oder QR-Codes, die auf Maschinen und Anlagen, aber auch auf einzelnen Ersatzteilen aufgebracht sind. Ein Benutzer kann einen solchen Code mit seinem Mobilgerät einlesen und mittels der Internetplattform 76 automatisch die dafür benötigten Ersatzteile identifizieren, ohne nähere Detailangaben machen zu müssen.

Die Internetplattform 76 stellt darüber hinaus eine Vielzahl weiterer Funktionalitäten zur Verfügung: So kann dort dem Prozess der Anfrage auf Lieferung eines Ersatzteils auf der Internetplattform 76 zunächst ein Angebots- und Annahmeprozess vorgeschaltet werden. Auch nachgeschaltete Prozesse wie Rechnungslegung können hierüber abgewickelt werden. Dadurch, dass die Servereinheit 36 sämtliche Bestandsdaten der angeschlossenen Außenlager 52, 54, 56 enthält, kann die Internetplattform 76 weiterhin auch online Lagerbestände der zweiten und dritten wirtschaftlichen Einheiten 58, 60 für entsprechend berechtigte Nutzer darstellen und verwalten. Dies ermöglicht eine virtuelle Bevorratung von Ersatzteilen inklusive Reservierung und Nachbestückung des realen Außenlagers 52, 54, 56. Virtuelle Bevorratung meint hier, dass dem Benutzer ein garantierter Vorrat an Ersatzteilen gegeben ist, der jedoch allein über logistische Maßnahmen garantiert wird, ohne dass ein reales Ersatzteil tatsächlich an einem Außenlager 52, 54, 56 des Benutzers vorhanden ist.

Eine weitere Möglichkeit, die die Internetplattform 76 für Benutzer in den wirtschaftlichen Einheiten 58, 60 bietet, ist die Möglichkeit des Abschlusses eines Liefergarantievertrages. Dieser garantiert für umfasste Ersatzteile eine Verfügbarkeit innerhalb einer bestimmten Anzahl von Stunden oder Tagen. Dieser kann beispielsweise auch vergünstigt sein, wenn die Anlage oder Maschine am Einsatzort 44, 46, 48, 50 von der ersten wirtschaftlichen Einheit 42, d.h. dem Hersteller der Ersatzteile hergestellt und erworben wurde.

Eine weitere wichtige optionale Funktion der Servereinheit 36 in FIG 2 (ebenso wie der Servereinheit 6 in FIG 1) ist die Fähigkeit anhand der empfangenen Anfragen auf Lieferung von Ersatzteilen eine Ausfallquote jedes Ersatzteils zu ermitteln. Aufgrund der Datensynchronität ist es möglich statistische Informationen über den Verbrauch und damit die Ausfallquote des jeweiligen Ersatzteiles zu generieren.

Gerade in Verbindung mit einer zuvor beschriebenen Liefergarantie kann in der Servereinheit 36 anhand dieser Ausfallquote ein Minimalbestand des Ersatzteils bestimmt werden und somit eine Bevorratungsplanung in den Außenlagern 52, 54, 56 erfolgen. Anhand der Ausfallquote bestimmt die Servereinheit 36, wie viele Ersatzteile mit einer vorgegebenen Wahrscheinlichkeit innerhalb eines zukünftigen Zeitraumes an einem Außenlager 52, 54, 56 oder einem Einsatzort 44, 46, 48, 50 benötigt werden. Hieraus kann ein Minimalbestand ermittelt werden.

Wiederum in Verbindung mit einer zuvor beschriebenen Liefergarantie kann die Servereinheit 36 als Reaktion auf das Erkennen des Unterschreitens des Minimalbestands eines Ersatzteils in einem der Außenlager 52, 54, 56 automatisch eine Lieferung des Ersatzteils an das jeweilige Außenlager 52, 54, 56 veranlassen. Diese erfolgt dann ohne Anfrage von außen durch ein entsprechendes Bestandsüberwachungsmodul der Servereinheit 36, wie es schon zu FIG 1 beschrieben wurde.

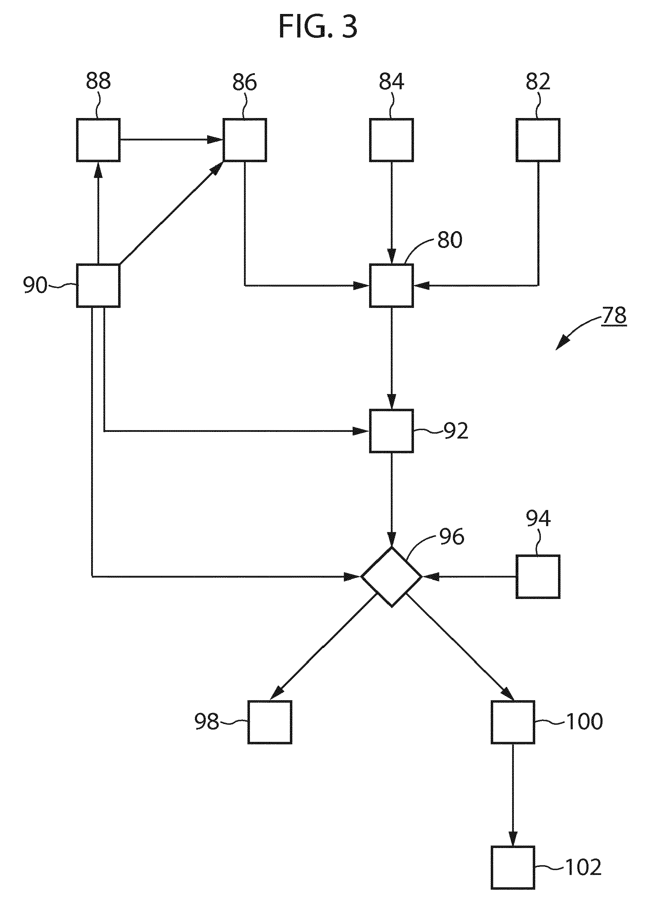

Abschließend wird anhand von FIG 3 noch einmal das prinzipielle Verfahren zur Ersatzteilversorgung 78 dargestellt, wie es in einer Servereinheit 6, 36 ausgeführt wird. In Schritt 80 empfängt die Servereinheit 6, 36 eine Anfrage auf Lieferung eines Ersatzteils. Diese Anfrage kann vorliegend drei unterschiedliche Quellen haben: Gemäß Schritt 82 kann die Anfrage manuell erzeugt worden sein, beispielsweise über die Internetplattform 76. Alternativ kann gemäß Schritt 84 die Anfrage automatisch in einem einem Außenlager 16, 18, 52, 54, 56 zugeordneten Lagerverwaltungssystem 66, 68, 70 erzeugt worden sein, da hier automatisiert ein entsprechender Bedarf ermittelt wurde.

Gemäß Schritt 86 kann die Anfrage auch in einem Bestandsüberwachungsmodul der Servereinheit 6, 36 selbst entstanden und von diesem gesendet worden sein, wenn nämlich zuvor in Schritt 88 mittels bereits beschriebener statistischer Methoden Ausfallquoten von Ersatzteilen und daraus ein Mindestbestand von Ersatzteilen in einem Außenlager 16, 18, 52, 54, 56 ermittelt wurden. Grundlage hierfür bildet die ständige Synchronisierung der Ersatzteilbestände zwischen Außenlagern 16, 18, 52, 54, 56 bzw. deren zugeordneten Lagerverwaltungssystemen 66, 68, 70 mit dem Datenbestand in der Servereinheit 6, 36 gemäß Schritt 90. Dieser Datenbestand wird einerseits zur beschriebenen statistischen Anwendung in Schritt 88 verwendet, andererseits zum Abgleich mit dem dort ermittelten Mindestbestand in Schritt 86.

In Reaktion auf den Empfang der Anfrage in Schritt 80 ermittelt die Servereinheit 6, 36 in Schritt 92 nun die Verfügbarkeit des angefragten Ersatzteils in den Außenlagern 16, 18, 52, 54, 56. Dies geschieht wiederum auf der Grundlage des gemäß Schritt 90 ständig synchronisierten Datenbestandes in der Servereinheit 6, 36. Anhand in Schritt 94 vorbestimmter, verknüpfter und gewichteter Kriterien, die bereits oben beschrieben wurden, ermittelt die Servereinheit 6, 36 in Schritt 96 nun, ob einerseits gemäß Schritt 98 eine direkte Lieferung des Ersatzteils aus einem der Hauptlager 4, 30, 34 erfolgen soll. Oder die Servereinheit 6, 36 ermittelt andererseits anhand besagter Kriterien, dass gemäß Schritt 100 eine Anfrage auf Lieferung des Ersatzteils an eines der Außenlager 16, 18, 52, 54, 56 erfolgen soll, wobei die Lieferung jeweils an dasjenige Außenlager 16, 18, 52, 54, 56 oder denjenigen Einsatzort 8, 10, 12, 14, 44, 46, 48, 50 erfolgen soll, in dem der Bedarf besteht. Hierbei werden weitere Informationen bei der Ermittlung verwendet, wie z.B. die Lieferzeiten zwischen Hauptlagern 4, 30, 34, Außenlagern 16, 18, 52, 54, 56 oder Einsatzorten 8, 10, 12, 14, 44, 46, 48, 50, die Bestände in den Außenlagern 16, 18, 52, 54, 56 (die wiederum wegen der Synchronisierung gemäß Schritt 90 vorliegen) etc.

Abschließend veranlasst im zweiten Fall in Schritt 102 das jeweils angefragte Außenlager 16, 18, 52, 54, 56 die Lieferung des Ersatzteils an das anfragende Außenlager 16, 18, 52, 54, 56 oder den anfragenden Einsatzort 8, 10, 12, 14, 44, 46, 48, 50. Dieses kann automatisiert oder durch entsprechende Anweisung eines Benutzers erfolgen. Die Ausführung der Entnahme des Ersatzteils aus dem angefragten Außenlager 16, 18, 52, 54, 56 oder auch der tatsächliche Versand kann z.B. über am Ersatzteil oder dessen Verpackung angebrachte RFID-Chips kontrolliert werden. Hierzu können an geeigneten Ausgängen der Außenlager 16, 18, 52, 54, 56 entsprechende RFID-Scanner angebracht sein, die mit der Servereinheit 6, 36 verbunden sind. Dadurch erhält die Servereinheit 6, 36 sofort beim Ausgang des Ersatzteils aus dem Außenlager 16, 18, 52, 54, 56 eine entsprechende Meldung und die Bestände können aktualisiert werden. Zudem ist dadurch in der Servereinheit 6, 36 die Ausführung des Versands hinterlegt.

## Patentansprüche

1. Lagersystem (1, 26) zur Ersatzteilversorgung, umfassend eine Anzahl von Außenlagern (16, 18, 52, 54, 56), die jeweils einem Einsatzort (8, 10, 12, 14, 44, 46, 48, 50) von Ersatzteilen zugeordnet sind, und eine zentrale Servereinheit (6, 36), wobei die zentrale Servereinheit (6, 36) dafür ausgebildet ist, bei einem Bedarf eines Ersatzteils an einem ersten Einsatzort (8, 10, 12, 14, 44, 46, 48, 50) oder einem ihm zugeordneten ersten Außenlager (16, 18, 52, 54, 56) eine erste Anfrage auf Lieferung des Ersatzteils an den ersten Einsatzort (8, 10, 12, 14, 44, 46, 48, 50) oder das ihm zugeordnete erste Außenlager (16, 18, 52, 54, 56) zu empfangen,
wobei die zentrale Servereinheit (6, 36) die Bestände der Ersatzteile in jedem Außenlager (16, 18, 52, 54, 56) der Anzahl von Außenlagern (16, 18, 52, 54, 56) speichert, und die zentrale Servereinheit (6, 36) weiter dafür ausgelegt ist, als Reaktion auf die Anfrage eine Verfügbarkeit des Ersatzteils in einem zweiten Außenlager (16, 18, 52, 54, 56) der Anzahl von Außenlagern (16, 18, 52, 54, 56) zu ermitteln und bei Erfüllung eines oder mehrerer vorgegebener Kriterien eine zweite Anfrage an das zweite Außenlager (16, 18, 52, 54, 56) auf Lieferung des Ersatzteils an den ersten Einsatzort (8, 10, 12, 14, 44, 46, 48, 50) oder das ihm zugeordnete erste Außenlager (16, 18, 52, 54, 56) zu richten.

2. Lagersystem (1, 26) nach Anspruch 1, weiter umfassend ein Hauptlager (4, 30, 34), dem die zentrale Servereinheit (6, 36) zugeordnet ist, wobei die zentrale Servereinheit (6, 36) auch die Bestände der Ersatzteile im Hauptlager (4, 30, 34) speichert.

3. Lagersystem (1, 26) nach Anspruch 1 oder 2, bei dem
- eine Nichtverfügbarkeit des Ersatzteils oder
- eine kürzere Lieferzeit zum ersten Einsatzort (8, 10, 12, 14, 44, 46, 48, 50) oder das ihm zugeordnete erste Außenlager (16, 18, 52, 54, 56)
ein vorgegebenes Kriterium ist.

4. Lagersystem (1, 26) nach einem der vorhergehenden Ansprüche, bei dem die Servereinheit (6, 36) mit dem Internet (40) verbunden ist und zum Empfang von Anfragen über eine Internetplattform (76) ausgebildet ist.

5. Lagersystem (1, 26) nach einem der vorhergehenden Ansprüche, bei dem die Servereinheit (6, 36) mit einem Lagerverwaltungssystem (62, 64, 66) des jeweiligen Außenlagers (16, 18, 52, 54, 56) verbunden ist und die Bestände der Ersatzteile im jeweiligen Außenlager (16, 18, 52, 54, 56) kontinuierlich vom Lagerverwaltungssystem (62, 64, 66) empfängt.

6. Lagersystem (1, 26) nach einem der vorhergehenden Ansprüche, bei dem die Servereinheit (6, 36) dafür ausgebildet ist, anhand der empfangenen Anfragen auf Lieferung von Ersatzteilen eine Ausfallquote jedes Ersatzteils zu ermitteln und anhand der Ausfallquote einen Minimalbestand des Ersatzteils zu bestimmen.

7. Lagersystem (1, 26) nach Anspruch 6, bei dem die Servereinheit (6, 36) dafür ausgebildet ist, als Reaktion auf das Erkennen des Unterschreitens des Minimalbestands eines Ersatzteils in einem Außenlager (16, 18, 52, 54, 56) eine Lieferung des Ersatzteils an das Außenlager (16, 18, 52, 54, 56) zu veranlassen.

8. Lagersystem (1, 26) nach einem der vorhergehenden Ansprüche, bei dem zentrale Servereinheit (6, 36), erstes Außenlager (16, 18, 52, 54, 56) und zweites Außenlager (16, 18, 52, 54, 56) jeweils unterschiedlichen wirtschaftlichen Einheiten (42, 58, 60) zugeordnet sind.

9. Verfahren zur Ersatzteilversorgung in einem Lagersystem (1, 26), umfassend eine Anzahl von Außenlagern (16, 18, 52, 54, 56), die jeweils einem Einsatzort (8, 10, 12, 14, 44, 46, 48, 50) von Ersatzteilen zugeordnet sind, wobei eine zentrale Servereinheit (6, 36) bei einem Bedarf eines Ersatzteils an einem ersten Einsatzort (8, 10, 12, 14, 44, 46, 48, 50) oder einem ihm zugeordneten ersten Außenlager (16, 18, 52, 54, 56) eine erste Anfrage auf Lieferung des Ersatzteils an den ersten Einsatzort (8, 10, 12, 14, 44, 46, 48, 50) oder das ihm zugeordnete erste Außenlager (16, 18, 52, 54, 56) empfängt,
wobei in der zentralen Servereinheit (6, 36) die Bestände der Ersatzteile in jedem der Außenlager (16, 18, 52, 54, 56) der Anzahl von Außenlagern (16, 18, 52, 54, 56) gespeichert werden, und die zentrale Servereinheit (6, 36) als Reaktion auf die Anfrage eine Verfügbarkeit des Ersatzteils in einem zweiten Außenlager (16, 18, 52, 54, 56) der Anzahl von Außenlagern (16, 18, 52, 54, 56) ermittelt und bei Erfüllung eines oder mehrerer vorgegebener Kriterien eine zweite Anfrage an das zweite Außenlager (16, 18, 52, 54, 56) auf Lieferung des Ersatzteils an den ersten Einsatzort (8, 10, 12, 14, 44, 46, 48, 50) oder das ihm zugeordnete erste Außenlager (16, 18, 52, 54, 56) richtet.

10. Verfahren nach Anspruch 9, bei dem das Lagersystem (1, 26) ein Hauptlager (4, 30, 34) umfasst, dem die zentrale Servereinheit (6, 36) zugeordnet ist, wobei in der zentralen Servereinheit (6, 36) auch die Bestände der Ersatzteile im Hauptlager (4, 30, 34) gespeichert werden.

11. Verfahren nach Anspruch 9 oder 10, bei dem
- eine Nichtverfügbarkeit des Ersatzteils oder
- eine kürzere Lieferzeit zum ersten Einsatzort (8, 10, 12, 14, 44, 46, 48, 50) oder das ihm zugeordnete erste Außenlager (16, 18, 52, 54, 56)
als vorgegebenes Kriterium verwendet werden.

12. Verfahren nach einem der Ansprüche 9 bis 11, bei dem die Servereinheit (6, 36) mit dem Internet (40) verbunden wird und Anfragen über eine Internetplattform (76) empfängt.

13. Verfahren nach einem der Ansprüche 9 bis 12, bei dem die Servereinheit (6, 36) mit einem Lagerverwaltungssystem (62, 64, 66) des jeweiligen Außenlagers (16, 18, 52, 54, 56) verbunden wird und die Bestände der Ersatzteile im jeweiligen Außenlager (16, 18, 52, 54, 56) kontinuierlich vom Lagerverwaltungssystem (62, 64, 66) empfängt.

14. Verfahren nach einem der Ansprüche 9 bis 13, bei dem die Servereinheit (6, 36) anhand der empfangenen Anfragen auf Lieferung von Ersatzteilen eine Ausfallquote jedes Ersatzteils ermittelt und anhand der Ausfallquote einen Minimalbestand des Ersatzteils bestimmt.

15. Verfahren nach Anspruch 14, bei dem die Servereinheit (6, 36) als Reaktion auf das Erkennen des Unterschreitens des Minimalbestands eines Ersatzteils in einem Außenlager (16, 18, 52, 54, 56) eine Lieferung des Ersatzteils an das Außenlager (16, 18, 52, 54, 56) veranlasst.

16. Verfahren nach einem der Ansprüche 9 bis 15, bei dem zentrale Servereinheit (6, 36), erstes Außenlager (16, 18, 52, 54, 56) und zweites Außenlager (16, 18, 52, 54, 56) jeweils unterschiedlichen wirtschaftlichen Einheiten (42, 58, 60) zugeordnet sind.

17. Servereinheit (6, 36), ausgebildet zum Ausführen des Verfahrens nach einem der Ansprüche 9 bis 16.
